# EUROPÄISCHE PATENTSCHRIFT

(11) **EP 1 425 742 B1**
(45) Veröffentlichungstag und Bekanntmachung des Hinweises auf die Patenterteilung: **23.11.2005**
(21) Anmeldenummer: 02767101.5
(22) Anmeldetag: 16.08.2002
(51) Int. Cl.: G11B 17/04

(54) **LAUFWERK**
DRIVE
MECANISME D'ENTRAINEMENT

(30) Priorität: 22.08.2001 DE 10141079
(43) Veröffentlichungstag der Anmeldung: 09.06.2004
(73) Patentinhaber: ROBERT BOSCH GMBH, 70442 Stuttgart (DE)
(72) Erfinder: BECKER, Volker, 31139 Hildesheim (DE); VOGT, Lothar, 31199 Barienrode (DE)
(86) Internationale Anmeldenummer: PCT/DE2002/002994
(87) Internationale Veröffentlichungsnummer: WO 2003/019551

(56) Entgegenhaltungen:
- EP-A- 0 935 245
- US-A- 4 580 256
- US-A- 5 054 016
- US-A- 5 974 016

## Beschreibung

### Stand der Technik

Die Erfindung geht von einem Laufwerk nach der Gattung des Hauptanspruchs aus.

Laufwerke für Speicherplatten mit einer Ladevorrichtung zum Transport einer Speicherplatte in das Laufwerk, wobei die Ladevorrichtung einen Träger zur Aufnahme der Speicherplatte umfasst, sind bereits bekannt. Dabei ist der Träger beispielsweise als Schublade ausgebildet, die zum Laden der Speicherplatte aus dem Laufwerk herausfährt.

Dokument US 4 580 256 zeigt ein Laufwerk, bei welchem ein Träger für eine Speicherplatte vorgesehen ist. Dieser Träger bleibt sowohl in der Ladeposition als auch in der Ausschubposition vollständing im Laufwerk.

### Vorteile der Erfindung

Das erfindungsgemäße Laufwerk mit den Merkmalen des Hauptanspruchs hat demgegenüber den Vorteil, der Träger in der Ladeposition vollständig im Laufwerk verbleibt und dass der Träger in einer ausschubposition aus dem Laufwerk herausragt. Auf diese Weise lässt sich ein schubladenförmiger Träger realisieren, der zum Laden der Speicherplatte nicht aus dem Laufwerk herausgefahren werden muss. Vielmehr kann die Speicherplatte direkt in das Laufwerk wie bei einem Walzeneinzug eingeschoben werden, ohne dass die Speicherplatte, wie beim Walzeneinzug üblich, verschmutzt oder beschädigt werden kann. Durch den Direkteinschub entfallen für den Benutzer weitere Bedienvorgänge für das Laden der Speicherplatte wie beispielsweise Tastenbetätigung, so dass das erfindungsgemäße Laufwerk besonders vorteilhaft im Automobil einsetzbar ist, in dem der das Fahrzeug steuernde Benutzer möglichst wenig vom Straßenverkehr abgelenkt werden soll.

Die Ladevorrichtung des erfindungsgemäßen Laufwerkes ist außerdem weniger anfällig gegen eingeschobene Kleinteile. Bei vergleichsweise geringem konstruktiven Aufwand wird der Verschleiß der Ladevorrichtung des erfindungsgemäßen Laufwerkes sowie der mit dieser Ladevorrichtung transportierten Speicherplatten erheblich reduziert.

Durch die in den Unteransprüchen aufgeführten Maßnahmen sind vorteilhafte Weiterbildungen und Verbesserungen des im Hauptanspruch angegebenen Laufwerkes möglich.

Besonders vorteilhaft ist es, dass der Träger im Bereich der Öffnung zwei elastisch gelagerte Zentrierelemente umfaßt, deren Abstand geringer als der Durchmesser einer ersten Speicherplatte ist, wobei ein Einführen der ersten Speicherplatte über die Einschuböffnung und die Öffnung auf den Träger die Zentrierelemente auseinanderdrückt, und dass der Träger an einer der Öffnung abgewandten Seite mindestens ein Halteelement zum Blockieren einer eingeführten ersten Speicherplatte umfaßt. Auf diese Weise wird die Speicherplatte mittels der Zentrierelemente sicher erfasst und in definierter Lage auf dem Träger abgelegt. Somit kann die Speicherplatte durch den Träger exakt in die Abspielposition verbracht werden. Ladefehler werden auf diese Weise vermieden.

Besonders vorteilhaft ist es, dass der Träger einen Rand umfasst, der zwischen jedem der beiden Zentrierelemente und dem mindestens einen Halteelement jeweils eine kreisbogenförmige Begrenzung bildet. Auf diese Weise können als sogenannte Shape-Kompaktdisks ausgebildete Speicherplatten zentrisch auf dem Träger gehalten und mit dem Träger in eine definierte Abspielposition verbracht werden. Dabei liegen mindestens drei Punkte der Kontur dieser Shape-Kompaktdisks definitionsgemäß auf einem Kreis, der der äußeren Berandung üblicher Kompaktdisks entspricht, so dass die Shape-Kompaktdisks zumindest über diese drei Punkte mittels den kreisförmigen Verbindungen auf dem Träger zentriert positioniert werden.

Besonders vorteilhaft ist es auch, dass der Träger eine Vertiefung umfasst, die eine Aufnahme zur Ablage einer zweiten Speicherplatte mit geringerem Durchmesser als die erste Speicherplatte bildet. Auf diese Weise können auch Speicherplatten mit einem kleineren Durchmesser als für übliche Kompaktdisks vorgesehen, zentrisch auf dem Träger gehalten und auf diese Weise in eine definierte Abspielposition durch den Träger verbracht werden.

Durch die Vertiefung lassen sich solche kleineren Speicherplatten auch formschlüssig auf dem Träger positionieren.

Vorteilhaft ist auch, dass die Ausdehnung des Trägers in Einschubrichtung etwa zwei Drittel des Durchmessers der ersten Speicherplatte beträgt. Auf diese Weise muss die erste Speicherplatte vom Benutzer nicht vollständig in das Laufwerk eingeschoben werden, sondern wird bereits vom Träger vollständig erfasst, wenn die erste Speicherplatte noch mit einem Drittel ihres Durchmessers aus dem Laufwerk herausragt.

Vorteilhaft ist weiterhin, dass der Antrieb im Abstand von etwa der Hälfte der Ausdehnung des Trägers in Einschubrichtung, ausgehend von der Ladeposition des Trägers, von der Einschuböffnung entfernt angeordnet ist und mit dem Träger in Eingriff kommt. Auf diese Weise kann der Träger bei geringstmöglichem konstruktivem Aufwand sowohl in die Abspielposition als auch in die Ausschubposition verfahren werden.

Besonders vorteilhaft ist es, dass die Ladevorrichtung mindestens einen Sensor umfasst, der eine auf den Träger eingelegte Speicherplatte detektiert. Auf diese Weise lässt sich ein automatischer Einzug der Speicherplatte mittels des Trägers in die Abspielposition realisieren, die keine weitere Benutzeraktivität erfordert und somit für den Benutzer besonders komfortabel ist.

Eine besonders einfache, den vorhandenen Antrieb ausnutzende Realisierung eines solchen Sensors besteht darin, dass ein erster Sensor als Drucksensor ausgebildet ist und dass der erste Sensor mit dem Antrieb in Verbindung steht und detektiert, wenn in Einschubrichtung auf den Träger und damit auf den Antrieb eine Kraft ausgeübt wird.

Besonders vorteilhaft ist es auch, dass die Ladevorrichtung einen Ladeschalter umfasst und dass bei Betätigen des Ladeschalters die Ladevorrichtung den Träger von der Ladeposition in eine Ausschubposition bringt, in der der Träger aus der Einschuböffnung herausragt. Auf diese Weise lassen sich auch Speicherplatten mit einem geringeren Durchmesser als üblich auf den Träger einlegen und durch den Träger in die Abspielposition transportieren.

Ein weiterer Vorteil besteht darin, dass der Träger in der Ausschubposition etwa zur Hälfte aus der Einschuböffnung herausragt. Auf diese Weise ist ein besonders weiter Ausschub der Speicherplatte aus dem Laufwerk möglich, die eine komfortable Entnahme der Speicherplatte für den Benutzer ermöglicht.

Vorteilhaft ist auch, dass die Ladevorrichtung den Träger von der Ausschubposition in die Ladeposition bringt, wenn der mindestens eine Sensor die Entnahme einer zuvor auf den Träger eingelegten Speicherplatte detektiert. Auf diese Weise ist ein automatisches Zurückfahren des Trägers in das Laufwerk möglich, das keine weitere Benutzeraktion erfordert und daher für den Benutzer besonders komfortabel in der Bedienung ist.

Dieser Vorteil ergibt sich auch dann, wenn die Ladevorrichtung den Träger nach Ablauf einer vorgegebenen Zeit von der Ausschubposition in die Abspielposition bringt.

Ein weiterer Vorteil besteht darin, dass bei Betätigen des Ladeschalters die Ladevorrichtung den Träger von der Ausschubposition in die Abspielposition bringt. Auf diese Weise können auch Speicherplatten mit einem kleineren Durchmesser als üblich vom Träger in die Abspielposition transportiert werden, selbst wenn sie durch den mindestens einen Sensor nicht als auf den Träger eingelegt, detektiert werden können, vor allem wenn sie in der Ausschubposition auf den Träger aufgelegt wurden, ohne dass ein Druck in Einschubrichtung auf den Antrieb ausgeübt wurde oder die Speicherplatte aufgrund ihrer geringen Größe von einem optischen Sensor im Laufwerk oder auf dem Träger erkannt werden konnte.

### Zeichnung

Ein Ausführungsbeispiel der Erfindung ist in der Zeichnung dargestellt und in der nachfolgenden Beschreibung näher erläutert. Es zeigen
Figur 1 ein erfindungsgemäßes Laufwerk mit einem Träger zur Aufnahme einer Speicherplatte in einer Ladeposition,
Figur 2 ein erfindungsgemäßes Laufwerk mit dem Träger in einer Abspielposition,
Figur 3 ein erfindungsgemäßes Laufwerk mit dem Träger in einer Ausschubposition,
Figur 4 einen Träger,
Figur 5 einen Träger mit eingelegter Speicherplatte geringeren Durchmessers als üblich und
Figur 6 ein Zustandsübergangsdiagramm für die Funktionsweise des erfindungsgemäßen Laufwerks.

### Beschreibung des Ausführungsbeispiels

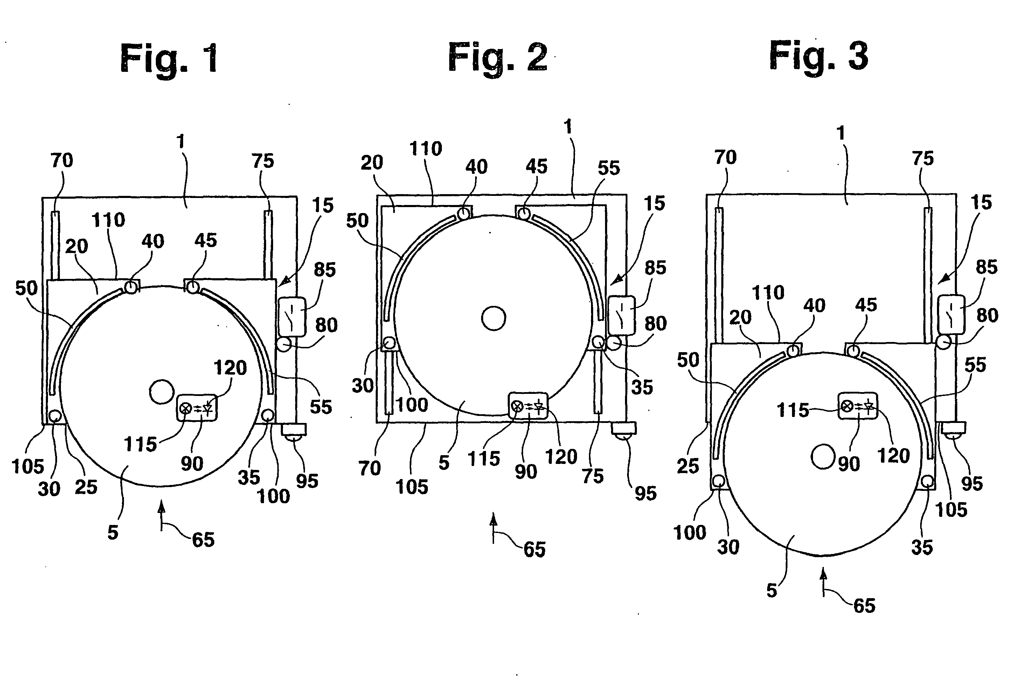

In Figur 1 kennzeichnet 1 ein Laufwerk für Speicherplatten 5, 10, 135. Bei dem Laufwerk 1 kann es sich beispielsweise um einen Kompaktdiskspieler, einen Kompaktdiskwechsler, einen Minidiskspieler, einen DVD-Spieler (digital versatile disk), ein CD-ROM-Laufwerk oder dergleichen handeln. Das Laufwerk 1 umfasst eine Ladevorrichtung 15 zum Transport einer Speicherplatte 5, 10, 135 in das Laufwerk 1 oder aus dem Laufwerk 1. Die Ladevorrichtung 15 wiederum umfasst einen Träger 20 zur Aufnahme der Speicherplatte 5, 10, 135.

Im Folgenden soll beispielhaft angenommen werden, dass es sich bei dem Laufwerk 1 um einen Kompaktdiskspieler handelt.

Gemäß Figur 1 umfasst die Ladevorrichtung 15 eine erste Führungsschiene 70 und eine zweite Führungsschiene 75, die beispielsweise als Linearführung in Einschubrichtung 65 im Laufwerk 1 verlaufen und in denen der Träger 20 geführt ist. Selbstverständlich kann auch nur eine einzige Führungsschiene oder mehr als zwei Führungsschienen für diesen Zweck im Laufwerk 1 vorgesehen sein. Der Transport des Trägers 20 in den Führungsschienen 70, 75 erfolgt mittels eines Antriebs 80, der beispielsweise als Linearantrieb ausgebildet sein kann. Als Linearantrieb eignet sich dabei beispielsweise ein Spindelantrieb, ein Riemenantrieb, ein Antrieb durch Zahnstange, durch Zahnriemen oder dergleichen.

Figur 1 zeigt den Träger 20 in einer Ladeposition. Dabei ist es vorgesehen, dass der Träger 20 in der Ladeposition im Wesentlichen nicht aus einer Einschuböffnung 25 des Laufwerks 1 herausragt, sondern idealer Weise vollständig innerhalb des Laufwerks 1 ruht. Dabei kann, wie in Figur 1 dargestellt, eine Vorderkante 100 des Trägers 20 mit einer die Einschuböffnung 25 aufweisenden Vorderkante 105 des Laufwerks 1 abschließen. Der Träger 20 umfaßt in Richtung der Einschuböffnung 25 eine Öffnung 1000 zum Einlegen der Speicherplatte 5, 10, 135.

Der hier beispielhaft beschriebene Träger 20 ist in Schubladenform ausgebildet. Er kann aber auch einfacher und weniger Material verbrauchend lediglich einen linken und einen rechten Bügel oder Haken umfassen, zwischen denen die Speicherplatte 5, 10, 135 geklemmt wird. Die Bügel oder Haken werden dabei beispielsweise synchron mittels des Linearantriebs angetrieben oder auf sonstige dem Fachmann bekannte Art und Weise einzeln oder gemeinsam verschoben. Die Bügel oder Haken bilden dabei ebenfalls eine Öffnung in Richtung der Einschuböffnung 25 zum Einlegen der Speicherplatte 5, 10, 135. Das Konzept der Aufnahme der Speicherplatte 5, 10, 135 durch den Träger 20 ist beim Gegenstand der Erfindung ausdrücklich vom Konzept eines Walzeneinzugs zu unterscheiden.

An der Vorderkante 100 im Bereich der Öffnung 1000 des Trägers 20 können zusätzlich gemäß Figur 1 zwei Zentrierelemente 30, 35 angeordnet und über die Einschuböffnung 25 und die Öffnung 1000 zugänglich sein. Der Abstand der beiden Zentrierelemente 30, 35 ist dabei geringer als der Durchmesser einer ersten Speicherplatte 5, die in diesem Beispiel eine übliche Kompaktdisk bilden soll. Die Zentrierelemente 30, 35 sind dabei elastisch auf dem Träger 20 gelagert. An einer der Vorderkante 100 des Trägers 20 gegenüberliegenden Hinterkante 110 des Trägers 20 sind gemäß Figur 1 ein erstes Halteelement 40 und ein zweites Halteelement 45 angeordnet. Dabei kann es auch vorgesehen sein, nur ein einziges Halteelement oder mehr als zwei Halteelemente an der Hinterkante 110 des Trägers 20 anzuordnen.

Wenn nun die erste Speicherplatte 5 über die Einschuböffnung 25 in das Laufwerk 1 eingeführt wird und der Träger 20 sich in der Ladeposition gemäß Figur 1 befindet, so drückt die erste Speicherplatte 5 zunächst die Zentrierelemente 30, 35 auseinander und gelangt auf diese Weise in eine definierte Position auf dem Träger 20. Der Einschubvorgang wird beendet, wenn die erste Speicherplatte 5 am ersten Halteelement 40 und/oder am zweiten Halteelement 45 anschlägt.

Durch die Zentrierelemente 30, 35 und die Halteelemente 40, 45 wird gewährleistet, dass die erste Speicherplatte 5 in einer definierten Position auf dem Träger 20 zum Liegen kommt und somit auch in eine definierte Abspielposition gebracht werden kann, um Zentrierfehler bei der Klemmung beziehungsweise bei der Positionierung der ersten Speicherplatte 5 zu vermeiden.

Die Positionierung der ersten Speicherplatte 5 auf dem Träger 20 kann zusätzlich noch dadurch verbessert werden, dass zwischen dem ersten Zentrierelement 30 und dem ersten Halteelement 40 eine erste kreisbogenförmige Begrenzung 50 auf dem Träger 20 angeordnet wird. Entsprechend kann zwischen dem zweiten Zentrierelement 35 und dem zweiten Halteelement 45 auf dem Träger 20 eine zweite kreisbogenförmige Begrenzung 55 angeordnet sein. Der Radius der kreisbogenförmigen Begrenzungen 50, 55 entspricht dabei etwa dem Radius der ersten Speicherplatte 5.

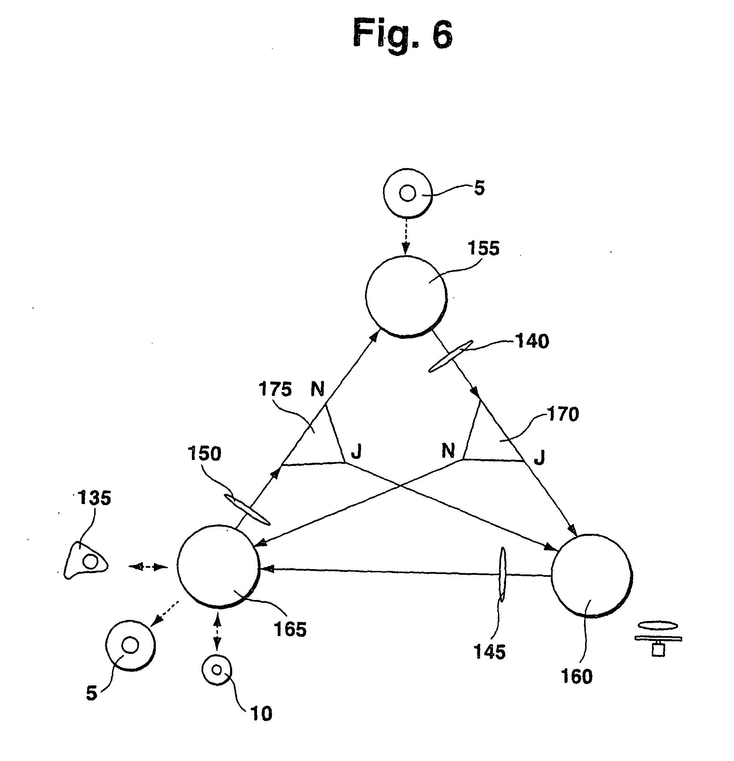

Die kreisbogenförmigen Begrenzungen 50, 55 sind besonders dann von Vorteil, wenn statt der ersten Speicherplatte 5 eine sogenannte in Figur 6 gezeigte Shape-Kompaktdisk 135 über die Einschuböffnung 25 in das Laufwerk 1 eingeschoben werden soll. Eine solche Shape-Kompaktdisk 135 hat die Eigenschaft, dass mindestens drei Punkte ihrer Kontur definitionsgemäß auf einem Kreis liegen, dessen Radius dem Radius der ersten Speicherplatte 5 entspricht. Wenn somit beim Einführen einer solchen Shape-Kompaktdisk 135 auch die Zentrierelemente 30, 35 nicht erfasst bzw. auseinandergedrückt werden, so kann die Shape-Kompaktdisk 135 in der Regel durch Anschlag zumindest eines Teils der definierten Punkte der Kontur der Shape-Kompaktdisk 135 an den kreisbogenförmigen Begrenzungen 50, 55 in definierter Position auf den Träger 20 eingelegt und von diesem in eine definierte Abspielposition gebracht werden.

Es kann nun gemäß Figur 1 vorgesehen sein, dass die Ausdehnung des Trägers 20 in Einschubrichtung 65 geringer ist als der Durchmesser der ersten Speicherplatte 5. Dabei kann die Ausdehnung des Trägers 20 in Einschubrichtung 65 beispielsweise etwa zwei Drittel des Durchmessers der ersten Speicherplatte 5 betragen, wie in Figur 1 angedeutet ist. Das bedeutet, dass nach Einschieben der ersten Speicherplatte 5 in den Träger 20 bis zum Anschlag an den Halteelementen 40, 45 die erste Speicherplatte 5 noch etwa mit einem Drittel ihres Durchmessers aus der Einschuböffnung 25 herausragt, so dass der Benutzer die erste Speicherplatte 5 nicht allzu weit in das Laufwerk 1 einschieben muss, damit die erste Speicherplatte 5 in die Abspielposition gebracht werden kann. Dies ist für den Benutzer besonders komfortabel, vor allem dann, wenn das Laufwerk 1 in einem Kraftfahrzeug eingesetzt werden soll und der Benutzer sich möglichst wenig vom Straßenverkehr ablenken lassen soll. Der Abstand der Zentrierelemente 30, 35 von den Halteelementen 40, 45 kann dabei so gewählt sein, dass nach vollständigem Einschub der ersten Speicherplatte 5 in den Träger 20, d. h. nach Anschlag der ersten Speicherplatte 5 an den Halteelementen 40, 45 die Zentrierelemente 30, 35 wieder in ihre Ausgangslage zurückkehren.

Es kann nun, wie in Figur 1 angedeutet, ebenfalls vorgesehen sein, dass der Antrieb 80 im Abstand von etwa der Hälfte der Ausdehnung des Trägers 20 in Einschubrichtung 65, ausgehend von der Ladeposition des Trägers 20, von der Einschuböffnung 25 entfernt im Laufwerk 1 angeordnet ist und mit dem Träger 20 in Eingriff kommt. Der Träger 20 kann somit immer in direktem Eingriff mit dem Antrieb 80 bleiben, sowohl wenn er in die Abspielposition in das Laufwerk 1 hinein, als auch wenn er in die Ausschubposition aus dem Laufwerk 1 hinaus verfahren wird. Dies ist in Figur 2 für die Abspielposition und in Figur 3 für die Ausschubposition zu entnehmen.

Gemäß Figur 1 kann es nun vorgesehen sein, dass die Ladevorrichtung 15 mindestens einen Sensor 85, 90 umfasst, der detektiert, ob eine Speicherplatte auf den Träger 20 eingelegt wurde. Dabei kann ein erster Sensor 85 vorgesehen sein, der als Drucksensor ausgebildet ist und mit dem Antrieb 80 derart in Verbindung steht, dass er detektiert, wenn in Einschubrichtung 65 auf den Träger 20 und damit auf den Antrieb 80 eine Kraft ausgeübt wird. Dies wird dahingehend interpretiert, dass eine Speicherplatte über die Einschuböffnung 25 in den Träger 20 eingeschoben wurde.

Als Drucksensor ist auch ein normaler Schalter denkbar. Ein solche Schalter wird in der Ausschubposition vom ausgefahrenen Träger 20 aktiviert. Drückt man den Träger 20 ein kleines Stückchen in das Laufwerk 1 hinein, so wird der Schalter freigegeben und der Druck erkannt.

Zusätzlich oder alternativ kann ein zweiter Sensor 90 vorgesehen sein, der beispielsweise als optischer Sensor ausgebildet ist und ebenfalls detektiert, ob eine Speicherplatte über die Einschuböffnung 25 in den Träger 20 eingeführt wurde. Der optische Sensor 90 kann dabei eine Lichtquelle 115 und eine Fotodiode 120 umfassen. Die Lichtquelle 115 und die Fotodiode 120 sind dabei derart am Träger 20 angeordnet, dass bei nicht in den Träger 20 eingelegter Speicherplatte das von der Lichtquelle 115 abgestrahlte Licht von der Fotodiode 120 empfangen wird und dass bei in den Träger 20 eingelegter Speicherplatte der Lichtstrahl von der Lichtquelle 115 zur Fotodiode 120 unterbrochen wird, so dass auf diese Weise die Anwesenheit der Speicherplatte im Träger 20 detektiert wird.

Weiterhin kann es optional vorgesehen sein, dass die Ladevorrichtung 15 einen Ladeschalter 95 umfasst, wobei nach Betätigen des Ladeschalters 95 die Ladevorrichtung 15 den Träger 20 von der Ladeposition in die Ausschubposition verbringt, in der der Träger 20 aus der Einschuböffnung 25 herausragt. Der Ladeschalter 95 steuert somit den Antrieb 80 an.

In Figur 2 kennzeichnen gleiche Bezugszeichen gleiche Elemente wie in Figur 1. In Figur 2 ist der Träger 20 mit der vollständig in den Träger 20 eingelegten ersten Speicherplatte 5 in der Abspielposition, in der die erste Speicherplatte 5 von einem in der Figur 2 nicht dargestellten Lesekopf einer Lesevorrichtung ausgelesen werden kann. Aus der Ladeposition wird der Träger 20 in die Abspielposition mittels des Antriebs 80 entlang der Führungsschienen 70, 75 verfahren. Wenn, wie im beschriebenen Beispiel gemäß Figur 1, die Ausdehnung des Trägers 20 in Einschubrichtung 65 etwa zwei Drittel des Durchmessers der ersten Speicherplatte 5 beträgt, dann liegt die erste Speicherplatte 5 vollständig im Laufwerk 1, wenn sie bis zum Anschlag an den Halteelementen 40, 45 in den Träger 20 eingeführt und vom Träger 20 um eine Strecke in das Laufwerk 1 hinein verfahren wurde, die etwa einem Drittel des Durchmessers der ersten Speicherplatte 5 entspricht. Wenn dann der Antrieb 80, wie zu Figur 1 beschrieben, im Laufwerk 1 positioniert ist, dann greift er in der Abspielposition gemäß Figur 2 gerade noch im Bereich der Vorderkante 100 des Trägers 20 in den Träger 20 ein, so dass ein Rücktransport des Trägers 20 aus der Abspielposition in die Ladeposition oder in die Ausschubposition durch den Antrieb 80 gewährleistet ist.

In Figur 3 kennzeichnen wiederum gleiche Bezugszeichen gleiche Elemente wie in den zuvor beschriebenen Figuren. Gemäß Figur 3 befindet sich der Träger 20 mit vollständig eingelegter erster Speicherplatte 5 in der Ausschubposition und ragt aus der Einschuböffnung 25 und damit aus dem Laufwerk 1 hinaus. Wenn dabei die erste Speicherplatte 5 bis zum Anschlag an den Halteelementen 40, 45 in den Träger 20 eingeführt ist und die Ausdehnung des Trägers 20 in Einschubrichtung 65 etwa zwei Drittel des Durchmessers der ersten Speicherplatte 5 beträgt, so ragt die erste Speicherplatte 5 mit etwa zwei Dritteln ihres Durchmessers aus dem Laufwerk 1 bzw. aus der Einschuböffnung 25 hinaus, wenn der Träger 20 etwa zur Hälfte aus dem Laufwerk 1 über die Einschuböffnung 25 hinaus entlang der Führungsschienen 70, 75 mittels des Antriebs 80 verfahren wurde. Auf diese Weise ist eine bequeme Entnahme der ersten Speicherplatte 5 durch den Benutzer aus dem Laufwerk 1 möglich. Wenn der Antrieb 80, wie zu Figur 1 beschrieben, im Laufwerk 1 positioniert ist, dann greift er gerade noch im Bereich der Hinterkante 110 des Trägers 20 in den Träger 20 ein, wenn sich der Träger 20 in der beschriebenen Ausschubposition gemäß Figur 3 befindet und gewährleistet somit einen Rücktransport des Trägers 20 in das Laufwerk 1 hinein.

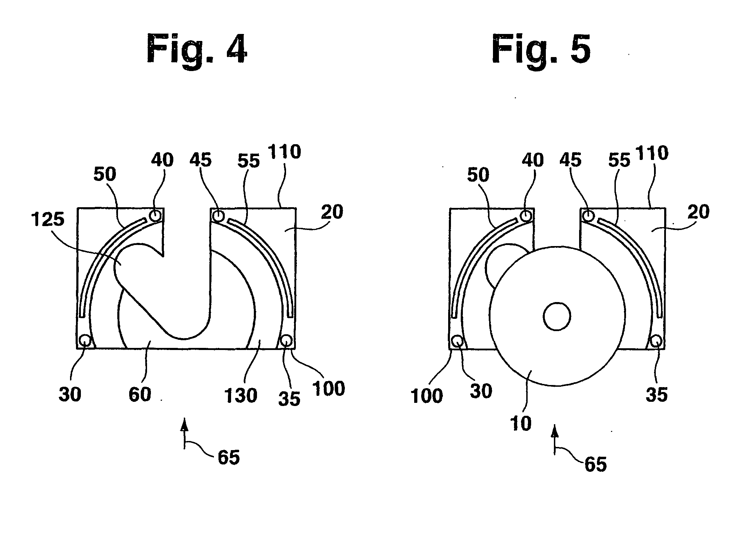

In Figur 4 ist der Träger 20 genauer dargestellt. Er umfasst im Aufnahmebereich für die Speicherplatten 5, 10, 135 eine Aussparung 125. Wenn der Träger 20, wie in Figur 2, in die Abspielposition verbracht wurde, so befindet sich ein Drehteller im Bereich der Aussparung 125. Wenn der Träger 20 zum Abspielen der eingelegten Speicherplatte 5, 10, 135 abgesenkt wird, so kommt die eingelegte Speicherplatte 5, 10, 135 in Eingriff mit dem in Figur 4 nicht dargestellten Drehteller und kann von diesem in Rotation versetzt werden, um ein Auslesen durch die in den Figuren ebenfalls nicht dargestellte Lesevorrichtung des Laufwerks 1 zu ermöglichen. Alternativ kann auch der Drehteller angehoben werden, um die Speicherplatte 5, 10, 135 zu erfassen und in Rotation zu versetzen.

Gemäß Figur 4 kann es optional vorgesehen sein, konzentrisch zu einer durch die Zentrierelemente 30, 35, die Halteelemente 40, 45 und gegebenenfalls die kreisbogenförmigen Begrenzungen 50, 55 definiert abgegrenzten Auflagefläche 130 für die erste Speicherplatte 5 eine Vertiefung 60 mit kreisbogenförmigem Umfang vorzusehen, deren Durchmesser kleiner als der Durchmesser der ersten Speicherplatte 5 ist und die zur Aufnahme einer zweiten Speicherplatte 10 mit geringerem Durchmesser als die erste Speicherplatte 5 dient, wie in Figur 5 dargestellt ist, in der gleiche Bezugszeichen gleiche Elemente kennzeichnen wie in Figur 4. Auch in Figur 4 kennzeichnen gleiche Bezugszeichen gleiche Elemente wie in den übrigen Figuren.

In einem Zustandsübergangsdiagramm gemäß Figur 6 wird nun die Funktionsweise des erfindungsgemäßen Laufwerks 1 näher erläutert. In einem ersten Zustand 155 des Laufwerks 1 befindet sich der Träger 20 in der Ladeposition gemäß Figur 1. Der erste Zustand 155, also die Ladeposition des Trägers 20, kann verlassen werden, wenn eine erste Bedingung 140 erfüllt ist. Die erste Bedingung 140 ist erfüllt, wenn zumindest einer der folgenden Fälle eintritt:
1. Der erste Sensor 85 detektiert das Einschieben einer Speicherplatte 5, 10, 135 über die Einschuböffnung 25 in den Träger 20.
2. Der zweite Sensor 90 detektiert das Einschieben einer Speicherplatte 5, 10, 135 über die Einschuböffnung 25 in den Träger 20.
3. Der Ladeschalter 95 wird betätigt.

Befindet sich der Träger 20 in der Ladeposition, so werden üblicherweise Speicherplatten mit dem Durchmesser der ersten Speicherplatte 5 über die Einschuböffnung 25 in den Träger 20 eingeschoben, d. h. Speicherplatten mit herkömmlichem Durchmesser, z. B. herkömmliche Kompaktdisks.

Ist die erste Bedingung 140 erfüllt, so wird geprüft, ob die vierte Bedingung 170 erfüllt ist. Die vierte Bedingung 170 ist erfüllt, wenn eine Speicherplatte 5, 10, 135 in der. Ladeposition des Trägers 20 eingelegt wurde. Die vierte Bedingung 170 ist dabei in den beiden erstgenannten Fällen der Detektion durch den ersten Sensor 85 oder den zweiten Sensor 90 erfüllt. Detektiert jedoch weder der erste Sensor 85 noch der zweite Sensor 90 bei Betätigung des Ladeschalters 95 eine Speicherplatte im Träger 20, so ist die vierte Bedingung 170 nicht erfüllt. Wenn die vierte Bedingung 170 erfüllt ist, so findet ein Zustandsübergang zu einem zweiten Zustand 160 statt, in der der Träger 20 in der Abspielposition vorliegt. Dieser Zustandsübergang ist somit dadurch gekennzeichnet, dass der Träger 20 von der Ladeposition in die Abspielposition gemäß Figur 2 transportiert wird. Ist die vierte Bedingung 170 nicht erfüllt, so findet ein Zustandsübergang zu einem dritten Zustand 165 statt, in dem der Träger 20 in der Ausschubposition gemäß Figur 3 vorliegt, so dass bei diesem Zustandsübergang der Träger 20 von der Ladeposition in die Ausschubposition transportiert wird. Im zweiten Zustand 160 wird die eingelegte Speicherplatte 5, 10, 135 abgespielt, d. h. die auf ihr gespeicherten Daten werden durch eine Lesevorrichtung des Laufwerks 1 ausgelesen und einer Wiedergabe zugeführt. Der zweite Zustand 160 wird verlassen, wenn die zweite Bedingung 145 erfüllt ist. Die zweite Bedingung 145 ist erfüllt, wenn zumindest einer der beiden folgenden Fälle eintritt:

4. Der Ladeschalter 95 wird betätigt.

5. Ein Auslesefehler beim Abspielen der Speicherplatte wird von einer Logik zur Auswertung der ausgelesenen Daten, die in den Figuren nicht dargestellt ist, festgestellt.

Wenn die zweite Bedingung 145 erfüllt ist, so findet ein Zustandsübergang vom zweiten Zustand 160 in den dritten Zustand 165 statt, d. h. der Träger 20 wird von der Abspielposition in die Ausschubposition gemäß Figur 3 transportiert. Der dritte Zustand 165, d. h. die Ausschubposition des Trägers 20 wird verlassen, wenn eine dritte Bedingung 150 erfüllt ist. Die dritte Bedingung 150 ist erfüllt, wenn zumindest einer der folgenden vier Fälle eintritt:
6. Der Ladeschalter 95 wird betätigt.
7. Der erste Sensor 85 detektiert das Einlegen einer Speicherplatte 5, 10, 135 in den Träger 20.
8. Der zweite Sensor 90 detektiert das Einlegen einer Speicherplatte 5, 10, 135 in den Träger 20.
9. Eine vorgegebene Zeit nach Erreichen des dritten Zustandes 165 läuft ab.

Wenn die dritte Bedingung 150 erfüllt ist, so wird geprüft, ob eine sechste Bedingung 175 erfüllt ist. Die sechste Bedingung 175 ist erfüllt, wenn im dritten Zustand 165 eine Speicherplatte 5, 10, 135 eingelegt wurde, also beispielsweise wenn der 7. oder der 8. Fall eintritt und einer der beiden Sensoren 85, 90 das Einlegen einer Speicherplatte 5, 10, 135 detektiert hat. Ist die sechste Bedingung 175 erfüllt, so findet ein Zustandsübergang in den zweiten Zustand 160 statt und der Träger 20 wird von der Ausschubposition in die Abspielposition zum Abspielen der eingelegten Speicherplatte 5, 10, 135 transportiert. Wenn im 6. oder im 9. Fall keiner der beiden Sensoren 85, 90 eine Speicherplatte 5, 10, 135 im Träger 20 detektiert, so ist die sechste Bedingung 175 nicht erfüllt und es findet ein Zustandsübergang vom dritten Zustand 165 in den ersten Zustand 155 statt, wobei der Träger 20 von der Ausschubposition in die Ladeposition transportiert wird.

Im dritten Zustand 165, also wenn der Träger 20 in der Ausschubposition vorliegt, kann eine im Träger 20 eingelegte Speicherplatte 5, 10, 135 aus dem Träger 20 entnommen werden oder es kann eine Speicherplatte 5, 10, 135 in den Träger 20 eingelegt werden. Zum Laden einer herkömmlichen Speicherplatte mit dem Durchmesser der ersten Speicherplatte 5 ist erfindungsgemäß der erste Zustand 155 des Laufwerks 1, also die Ladeposition des Trägers 20, vorgesehen, so dass das Laden einer solchen Speicherplatte im dritten Zustand 165 zwar möglich, aber nicht erforderlich ist. D. h., zum Laden der ersten Speicherplatte 5 muss der Träger 20 nicht zuvor in die Ausschubposition verbracht werden. Die Ausschubposition des Trägers 20 dient vielmehr vornehmlich dem komfortablen Entnehmen der ersten Speicherplatte 5 aus dem Träger 20. Für die zweite Speicherplatte 10 und die sogenannten Shape-Kompaktdisks, die in Figur 6 mit dem Bezugszeichen 135 gekennzeichnet sind, ist es jedoch empfehlenswert, die Ausschubposition des Trägers 20, also den dritten Zustand 165 zum Laden solcher Speicherplatten vorzusehen, da ansonsten ein definiert zentrisches Einschieben einer solchen Speicherplatte in der Ladeposition des Trägers 20 nicht gewährleistet ist. Die Ausschubpositionen des Trägers 20 und damit der dritte Zustand 165 dient dabei ebenfalls auch dem Entnehmen der zweiten Speicherplatte 10 bzw. der Shape-Kompaktdisk 135 aus dem Träger 20.

Wenn im dritten Zustand 165 der Benutzer eine eingelegte Speicherplatte 5, 10, 135 entnommen hat, so wird diese Entnahme dadurch detektiert, dass weder der erste Sensor 85 noch der zweite Sensor 90 eine eingelegte Speicherplatte detektieren, d. h. es wird weder Druck auf den Drucksensor 85 ausgeübt, noch wird der Lichtstrahl des optischen Sensors 90 unterbrochen. Auf diese Weise detektieren die Sensoren 85, 90 die Entnahme der Speicherplatte 5, 10, 135, indem sie keine eingelegte Speicherplatte mehr detektieren. Dies führt, wie beschrieben, zum Übergang in den ersten Zustand 155. Detektiert zumindest einer der beiden Sensoren 85, 90 bei Betätigung des Ladeschalters 95 oder bei Ablauf der vorgegebenen Zeit gemäß dem sechsten bzw. dem neunten Fall im dritten Zustand 165 eine eingelegte Speicherplatte 5, 10, 135 durch Ausüben von Druck auf den Antrieb 80 und damit auf den Drucksensor 85 bzw. durch Unterbrechung des Lichtstrahls des optischen Sensors 90, so findet, wie beschrieben, ein Zustandsübergang vom dritten Zustand 165 in den zweiten Zustand 160 statt. Wird jedoch bei Eintreten des 6. Falls oder des 9. Falls durch keinen der beiden Sensoren 85, 90 eine eingelegte Speicherplatte 5, 10, 135 detektiert, so findet, wie beschrieben, ein Zustandsübergang vom dritten Zustand 165 zum ersten Zustand 155 statt. So wird bei Einlegen einer Speicherplatte 5, 10, 135 im dritten Zustand 165 der Träger 20 entweder sofort nach Detektion der eingelegten Speicherplatte 5, 10, 135 durch zumindest einen der beiden Sensoren 85, 90 in die Abspielposition verbracht, spätestens jedoch bei Betätigung des Ladeschalters 95 bzw. nach Ablauf der vorgegebenen Zeit, sofern dann durch mindestens einen der beiden Sensoren eine eingelegte Speicherplatte 5, 10, 135 detektiert wird.

Der optische Sensor 90 ist vorteilhafter Weise im Bereich der Vorderkante 105 des Laufwerks 1 im Laufwerk 1 angeordnet. Dies gewährleistet die Detektion von in den Träger 20 eingelegten Speicherplatten 5, 10, 135 sowohl in der Ladeposition als auch in der Ausschubposition, und, wie in Figur 2 zu sehen, auch in der Abspielposition des Trägers 20. Um vor allem auch das Einlegen von Speicherplatten mit geringerem Durchmesser, wie beispielsweise der zweiten Speicherplatte 10 oder von Shape-Kompaktdisks oder allgemein Shape-Speicherplatten 135 sowohl in der Ladeposition als auch in der Ausschubposition des Trägers 20 detektieren zu können, ist es vorteilhaft, den optischen Sensor 90 auch etwa im gleichen Abstand zu jedem der beiden Zentrierelemente 30, 35 anzuordnen.

Zur Realisierung der Zustandsübergänge gemäß Figur 6 und dem Abprüfen der Bedingungen des dort gezeigten Zustandsübergangsdiagramms umfasst das Laufwerk 1 eine Steuerung, die in den Figuren nicht dargestellt ist und an die die Sensoren 85, 90, der Antrieb 80 und der Ladeschalter 95 angeschlossen sind.

Gemäß der Erfindung kann es vorgesehen sein, dass der Träger 20 nur in der Ausschubposition aus dem Laufwerk 1 herausragt.

## Patentansprüche

1. Laufwerk (1) für Speicherplatten (3.10,135) mit einer Ladevorrichtung (15) zum Transport einer Speicherplatte (5,10,135) in das Laufwerk (1), wobei die Ladevorrichtung (15) einen Träger (20) zur Aufnahme der Speicherplatte (5,10, 135) umfasst, wobei der Träger (20) in der Ladeposition vollständig im Laufwerk (1) verbleibt und der Träger (20) in einer Ausschubposition aus dem Laufwerk (1) herausragt.

2. Laufwerk (1) nach Anspruch 1, **dadurch gekennzeichnet, dass** der Träger (20) in Richtung einer Einschuböffnung (25) des Laufwerks (1) eine Öffnung (1000) zum Einlegen der Speichsrp3atte (5, 20, 135) bildet..

3. Laufwerk nach Anspruch 1 oder 2, **dadurch gekennzeichnet, dass** der Träger (20) im Bereich der Öffnung (1000) zwei elastisch gelagerte Zentrierelemente (30, 35) umfaßt, deren Abstand geringer als der Durchmesser einer ersten Speicherplatte (5) ist, wobei ein Einführen der ersten Speicherplatte (5) über die Einschuböffnung (25) und die Öffnung (1000) auf den Träger (20) die Zentrierelemente (30, 35) auseinanderdrückt, und dass der Träger (20) an einer der Öffnung (1000) abgewandten Seite mindestens ein Halteelement (40, 45) zum Blockieren einer eingeführten ersten Speicherplatte (5) umfaßt.

4. Laufwerk (1) nach Anspruch 3, **dadurch gekennzeichnet, dass** der Abstand zwischen den Zentrierelementen (30, 35) und dem mindestens einen Ralceelement (40, 45) so gewählt ist, dass beim Anstossen der ersten Speicherplatte (5) am mindestens einen Halteelement (40, 45) die Zentrierelemente (30, 35) wieder in ihre Ausgangslage zurückkehren.

5. Laufwerk (1) nach Anspruch 3 oder 4, **dadurch gekennzeichnet, dass** der Träger (20) einen Rand (50, 55) umfaßt, der zwischen jedem der beiden Zentrierelemente (30, 35) und dem mindestens einen Halteelement (40, 45) jeweils eine kreisbogenförmige Begrenzung bildet.

6. Laufwerk (1) nach einem der vorherigen Ansprüche, **dadurch gekennzeichnet, dass** der Träger (20) eine Vertiefung (60) umfaßt, die eine Aufnahme zur Ablage einer zweiten Speicherplatte (10) mit geringerem Durchmesser als die erste Speicherplatte (5) bildet.

7. Laufwerk (1) nach einem der vorherigen Ansprüche, **dadurch gekennzeichnet, dass** die Ausdehnung des Trägers (20) in Einschubrichtung (65) etwa zwei Drittel des Durchmessers der ersten Speicherplatte (5) beträgt.

8. Laufwerk (1) nach einem der vorherigen Ansprüche, **dadurch gekennzeichnet, dass** die Ladevorrichtung (15) eine Führung (70, 75), insbesondere eine Linearführung, umfaßt, in der der Träger (20) gelagert ist.

9. Laufwerk (1) nach einem der vorherigen Ansprüche, **dadurch gekennzeichnet, dass** die Ladevorrichtung (15) einen Antrieb (80), insbesondere einen Linearantrieb, zum Transport des Trägers (20) umfaßt.

10. Laufwerk (1) nach Anspruch 9, **dadurch gekennzeichnet, dass** der Antrieb (80) im Abstand von etwa der Hälfte der Ausdehnung des Trägers (20) in Einschubrichtung (65), ausgehend von der Ladeposition des Trägers (20), von der Einschuböffnung (25) entfernt angeordnet ist und mit dem Träger (20) in Eingriff Kommt.

11. Laufwerk (1) nach einem der vorherigen Ansprüche, **dadurch gekennzeichnet, dass** die Ladevorrichtung (13) mindestens einen Sensor (85, 90) umfaßt, der eine auf den Träger (20) eingelegte Speicherplatte (5, 10, 135) detektiert.

12. Laufwerk (1) nach Anspruch 11, soweit er auf Anspruch 6 oder 9 rückbezogen ist, **dadurch gekennzeichnet, dass** ein erster Sensor (85) als Drucksensor ausgebildet ist und dass der erste Sensor (85) mit dem Antrieb (80) in Verbindung steht und detektiert, wenn in Einschubrichtung (65) auf den Träger (20) und damit auf den Antrieb (80) eine Kraft ausgeübt wird.

13. Laufwerk (1) nach Anspruch 11 oder 12, **dadurch gekennzeichnet, dass** ein zweiter Sensor (90) als optischer Sensor ausgebildet ist.

14. Laufwerk (1) nach Anspruch 11, 12 oder 13, **dadurch gekennzeichnet, dass** die Ladevorrichtung (15) den Träger (20) in eine Abspielposition bringt, wenn der mindestens eine Sensor (85, 90) eine auf den Träger (20) eingelegte Speicherplatte (5, 10, 135) detektiert.

15. Laufwerk (1) nach einem der vorherigen Ansprüche, **dadurch gekennzeichnet, dass** die Ladevorrichtung (15) einen Ladeschalter (95) umfaßt und dass nach Betätigen des Ladeschalters (95) die Ladevorrichtung (15) den Träger (20) von der Ladeposition in eine Ausschubposition bringt, in der der Träger (20) aus der Einschuböffnung (25) herausragt.

16. Laufwerk (1) nach einem der vorherigen Ansprüche, **dadurch gekennzeichnet, dass** der Träger (20) in einer Ausschubposition etwa zur Hälfte aus der Einschuböffnung (25) herausragt.

17. Laufwerk (1) nach einem der vorherigen Ansprüche, **dadurch gekennzeichnet, dass** die Ladevorrichtung (15) den Träger (20) von einer Ausschubposition in die Ladeposition bringt, wenn die Entnahme einer zuvor auf den Träger (20) eingelegten Speicherplatte (5, 10, 135) detektiert wird.

18. Laufwerk (1) nach einem der vorherigen Ansprüche, **dadurch gekennzeichnet, dass** die Ladevorrichtung (15) den Träger (20) nach Ablauf einer vorgegebenen Zeit von einer Ausschubposition in eine Abspielposition bringt.

19. Laufwerk (1) nach Anspruch 15 oder 16, **dadurch gekennzeichnet, dass** bei Betätigen des Ladeschalters (95) die Ladevorrichtung (15) den Träger (20) von der Ausschubposition in die Abspielposition bringt.

## Claims

1. Drive (1) for memory disks (5, 10, 135) having a loading apparatus (15) for transporting a memory disk (5, 10, 135) into the drive (1), with the loading apparatus (15) having a mount (20) for holding the memory disk (5, 10, 135), wherein the mount (20) remains completely in the drive (1) when in the loaded position, and the mount (20) projects out of the drive (1) when in an extended position.

2. Drive (1) according to Claim 1, **characterized in that** the mount (20) forms an opening (1000) in the direction of an insertion opening (25) in the drive (1), for the insertion of the memory disk (5, 10, 135).

3. Drive according to Claim 1 or 2, **characterized in that** the mount (20) has two elastically mounted centring elements (30, 35) in the area of the opening (1000), the distance between which is less than the diameter of a first memory disk (5), wherein insertion of the first memory disk (5) via the insertion opening (25) and the opening (1000) onto the mount (20) forces the centring elements (30, 35) apart from one another, and **in that** the mount (20) has at least one holding element (40, 45) on a side facing away from the opening (1000), in order to block an inserted first memory disk (5).

4. Drive (1) according to Claim 3, **characterized in that** the distance between the centring elements (30, 35) and the at least one holding element (40, 45) is chosen such that the centring elements (30, 35) return to their initial position when the first memory disk (5) abuts against the at least one holding element (40, 45).

5. Drive (1) according to Claim 3 or 4, **characterized in that** the mount (20) has a rim (50, 55) which in each case forms a boundary in the form of a circular arc between each of the two centring elements (30, 35) and the at least one holding element (40, 45).

6. Drive (1) according to one of the preceding claims, **characterized in that** the mount (20) has a depression (60) which forms a receptacle for holding a second memory disk (10) with a smaller diameter than the first memory disk (5).

7. Drive (1) according to one of the preceding claims, **characterized in that** the extent of the mount (20) in the insertion direction (65) corresponds to approximately two thirds of the diameter of the first memory disk (5).

8. Drive (1) according to one of the preceding claims, **characterized in that** the loading apparatus (15) has a guide (70, 75), in particular a linear guide, in which the mount (20) is mounted.

9. Drive (1) according to one of the preceding claims, **characterized in that** the loading apparatus (15) has a drive (80), in particular a linear drive, for transportation of the mount (20).

10. Drive (1) according to Claim 9, **characterized in that** the drive (80) is arranged at a distance of about half of the extent of the mount (20) away from the insertion opening (25) in the insertion direction (65), and engages with the mount (20), starting from the loaded position of the mount (20).

11. Drive (1) according to one of the preceding claims, **characterized in that** the loading apparatus (15) has at least one sensor (85, 90) which detects a memory disk (5, 10, 135) which has been inserted onto the mount (20).

12. Drive (1) according to Claim 11, to the extent that it refers back to Claim 8 or 9, **characterized in that** a first sensor (85) is in the form of a pressure sensor, and **in that** the first sensor (85) is connected to the drive (80) and detects when a force is exerted in the insertion direction (65) on the mount (20), and thus on the drive (80).

13. Drive (1) according to Claim 11 or 12, **characterized in that** a second sensor (90) is in the form of an optical sensor.

14. Drive (1) according to Claim 11, 12 or 13, **characterized in that** the loading apparatus (15) moves the mount (20) to a play-back position when the at least one sensor (85, 90) detects a memory disk (5, 10, 135) which has been inserted onto the mount (20).

15. Drive (1) according to one of the preceding claims, **characterized in that** the loading apparatus (15) has a loading switch (95) and **in that**, after operation of the loading switch (95), the loading apparatus (15) moves the mount (20) from the loaded position to an extended position in which the mount (20) projects out of the insertion opening (25).

16. Drive (1) according to one of the preceding claims, **characterized in that**, in an extended position, approximately half of the mount (20) projects out of the insertion opening (25).

17. Drive (1) according to one of the preceding claims, **characterized in that** the loading apparatus (15) moves the mount (20) from an extended position to the loaded position when the removal of a memory disk (5, 10, 135) which has previously been inserted onto the mount (20) is detected.

18. Drive (1) according to one of the preceding claims, **characterized in that** the loading apparatus (15) moves the mount (20) to a play-back position from an extended position once a predetermined time has elapsed.

19. Drive (1) according to Claim 15 or 16, **characterized in that**, on operation of the loading switch (95), the loading apparatus (15) moves the mount (20) from the extended position to the play-back position.

## Revendications

1. Mécanisme d'entraînement (1) pour des disques d'enregistrement (5, 10, 135) comportant un dispositif de chargement (15) pour amener un disque d'enregistrement (5, 10, 135) au mécanisme d'entraînement (1), ce dispositif (15) comportant, pour accueillir le disque d'enregistrement (5, 10), un support (20) qui, en position de chargement, est inclus le mécanisme d'entraînement (1), tandis qu'en position d'éjection il dépasse de ce dispositif (1).

2. Mécanisme d'entraînement (1) selon la revendication 1,
**caractérisé en ce que**
le support (20) présente, en direction d'une ouverture d'introduction (25) du mécanisme d'entraînement (1), une ouverture (1000) pour y placer le disque d'enregistrement (5, 10, 135).

3. Mécanisme d'entraînement (1) selon la revendication 1 ou 2,
**caractérisé en ce que**
le support (20) présente, dans la zone de l'ouverture (1000), deux éléments de centrage (30, 35) montés élastiquement et dont l'espacement est inférieur au diamètre d'un premier disque d'enregistrement (5), de sorte que, quand on amène le premier disque d'enregistrement (5) à travers l'ouverture d'introduction (25) et l'ouverture (1000) sur le support (20), les éléments de centrage (30, 35) s'écartent l'un de l'autre par poussée, le support (20) présentant sur son côté éloigné de l'ouverture (1000) au moins un élément de maintien (40, 45) pour bloquer un premier disque d'enregistrement (5) introduit.

4. Mécanisme d'entraînement (1) selon la revendication 3,
**caractérisé en ce que**
la distance séparant les éléments de centrage (30, 35) et d'au moins un élément de maintien (40, 45) est choisie de manière que, quand le premier disque d'enregistrement (5) rencontre au moins un élément de maintien (40, 45), les éléments de centrage (30, 35) reviennent à leur position initiale.

5. Mécanisme d'entraînement (1) selon la revendication 3 ou 4,
**caractérisé en ce que**
le support (20) présente un bord (50, 55) qui, entre chacun des deux éléments de centrage (30, 35) et au moins un élément de maintien (40, 45), constitue chaque fois une limitation en forme d'arc de cercle.

6. Mécanisme d'entraînement (1) selon une des revendications précédentes,
**caractérisé en ce que**
le support (20) présente une cavité (60) qui constitue un logement pour y déposer un second disque d'enregistrement (10) présentant un diamètre plus petit que le premier disque d'enregistrement (5)

7. Mécanisme d'entraînement (1) selon une des revendications précédentes,
**caractérisé en ce que**
l'étendue du support (20) dans la direction d'introduction (65) est à peu près égale aux 2/3 du diamètre du premier disque d'enregistrement (5).

8. Mécanisme d'entraînement (1) selon une des revendications précédentes,
**caractérisé en ce que**
le dispositif de chargement (15) comprend un guidage (70, 75), notamment un guidage linéaire dans lequel est monté le support (20).

9. Mécanisme d'entraînement (1) selon une des revendications précédentes,
**caractérisé en ce que**
le dispositif de chargement (15) comprend un entraînement (80), notamment un entraînement linéaire, pour assurer le transport du support (20).

10. Mécanisme d'entraînement (1) selon la revendication 9,
**caractérisé en ce que**
l'entraînement (80), partant de la position de chargement du support (20), est éloigné de l'ouverture d'introduction (25) d'une distance d'environ la moitié de l'étendue du support (20) dans la direction d'introduction (65), et vient en prise avec le support (20).

11. Mécanisme d'entraînement (1) selon une des revendications précédentes,
**caractérisé en ce que**
le dispositif de chargement (15) comprend au moins un capteur (85, 90) qui détecte un disque d'enregistrement (5, 10, 135) déposé sur le support (20).

12. Mécanisme d'entraînement (1) selon la revendication 11, dans la mesure où elle renvoie à la revendication 8 ou 9,
**caractérisé en ce qu'**
un premier capteur (85) est un capteur de pression en relation avec l'entraînement (80) et il détecte si une force est exercée dans le sens d'introduction (65) sur le support (20) et donc sur l'entraînement (80).

13. Mécanisme d'entraînement (1) selon la revendication 11 ou 12,
**caractérisé en ce qu'**
un second capteur (90) est un capteur optique.

14. Mécanisme d'entraînement (1) selon la revendication 11, 12 ou 13,
**caractérisé en ce que**
le dispositif de chargement (15) amène le support (20) en position de lecture quand au moins un capteur (85, 90) détecte un disque d'enregistrement (5, 10, 135) déposé sur le support (20).

15. Mécanisme d'entraînement (1) selon une des revendications précédentes,
**caractérisé en ce que**
le dispositif de chargement (15) comprend un contacteur de chargement (95) et, quand celui-ci est actionné, le dispositif de chargement (15) fait passer le support (20) de la position de chargement à une position d'éjection dans laquelle le support (20) dépasse de l'ouverture d'introduction (25).

16. Mécanisme d'entraînement (1) selon une des revendications précédentes,
**caractérisé en ce que**
le support (20), en position d'éjection, dépasse environ de moitié de l'ouverture d'introduction (25).

17. Mécanisme d'entraînement (1) selon une des revendications précédentes,
**caractérisé en ce que**
le dispositif de chargement (15) fait passer le support (20) de la position d'éjection à celle de chargement quand est détecté l'enlèvement d'un disque d'enregistrement (5, 10, 135) déposé précédemment sur le support (20).

18. Mécanisme d'entraînement (1) selon une des revendications précédentes,
**caractérisé en ce que**
le dispositif de chargement (15), après écoulement d'un temps prédéterminé, fait passer le support (20) de la position d'éjection à la position de lecture.

19. Mécanisme d'entraînement (1) selon la revendication 15 ou 16,
**caractérisé en ce que**
le dispositif de chargement (15) fait passer le support (20) de la position d'éjection à la position de lecture quand on actionne le contacteur de chargement (95).
